# EUROPEAN PATENT APPLICATION

(11) **EP 4 528 623 A1**
(43) Date of publication of application: **26.03.2025**
(21) Application number: 23887968.8
(22) Date of filing: 06.11.2023
(51) Int. Cl.: G06Q 30/06

(54) **INTERACTION METHOD AND APPARATUS, ELECTRONIC DEVICE, AND COMPUTER READABLE MEDIUM**

(30) Priority: 07.11.2022 CN 202211384494
(71) Applicant: BEIJING YOUZHUJU NETWORK TECHNOLOGY CO. LTD., Beijing 101299 (CN)
(72) Inventor: TONG, Liuyi, Beijing 100028 (CN); SUN, Yu, Beijing 100028 (CN); RU, Qing, Beijing 100028 (CN); ZHOU, Xiaoxing, Beijing 100028 (CN); ZHAO, Xiaojing, Beijing 100028 (CN); CAO, Huichun, Beijing 100028 (CN)
(74) Representative: Isarpatent
(86) International application number: PCT/CN2023/129995
(87) International publication number: WO 2024/099278

(57) **Abstract**

The present application discloses an interaction method and apparatus, an electronic device, and a computer-readable medium. The method includes: after a gifting operation request is received, determining an object to be gifted and a gift receiving account, and displaying a configuration interface, where the configuration interface includes a plurality of candidate display configuration items corresponding to the object to be gifted; and after a configuration operation triggered for the configuration interface is received, determining a target display configuration item, such that the target display configuration item includes a target display manner and a target display content corresponding to the object to be gifted; and finally, sending the target display configuration item to the gift receiving account to display the target display content on the gift receiving account according to the target display manner, so that a recipient can view the target display content by means of the gift receiving account, thereby allowing the recipient to at least be informed that a giver has gifted a present. This is beneficial for enhancing both gift sending experience of the giver and the gift receiving experience of the recipient.

## Description

### CROSS-REFERENCE TO RELATED APPLICATION(S)

This application claims the benefit of the Chinese Patent Application No. 202211384494.9 filed on November 07, 2022. The entire teachings of the above application are incorporated herein by reference.

### FIELD

The present application relates to the field of Internet technologies, and in particular to an interaction method and apparatus, an electronic device, and a computer-readable medium.

### BACKGROUND

With the development of Internet technologies, a user may utilize the Internet to engage in various interaction processes related to a product (e.g., recommendations, placing orders, or gifting), to meet some needs of the user for the product. Among these, gifting refers to a user giving a product they ordered as a gift to another user.

However, some flaws in the gifting process for some products have impacts on the user experience.

### SUMMARY

In order to solve the technical problems described above, the present application provides an interaction method and apparatus, an electronic device, and a computer-readable medium, which can enhance the user experience.

To achieve the above object, the present application provides the following technical solutions.

The present application provides an interaction method. The method includes:
in response to a gifting operation request, determining an object to be gifted and a gift receiving account, and displaying a configuration interface, where the configuration interface includes a plurality of candidate display configuration items corresponding to the object to be gifted, and the plurality of candidate display configuration items include at least one candidate display manner and at least one candidate display content;
in response to a configuration operation triggered for the configuration interface, determining a target display configuration item, the target display configuration item including a target display manner and a target display content corresponding to the object to be gifted; and
sending the target display configuration item to the gift receiving account to display the target display content on the gift receiving account according to the target display manner.

In a possible implementation, the target display manner is: adding the target display content to a to-be-played information display feed corresponding to the gift receiving account, the target display content corresponding to a preset arrangement position in the to-be-played information display feed.

In a possible implementation, the at least one candidate display content includes a plurality of candidate video data; and
a determination process for the target display content includes:
in response to a selection operation for the target video data of the plurality of candidate video data, determining the target display content according to the target video data.

In a possible implementation, the plurality of candidate video data are determined according to at least one of a type of the object to be gifted, a delivery time of the object to be gifted, and an associated account corresponding to the object to be gifted, the associated account satisfying a preset association relationship with the object to be gifted.

In a possible implementation, the configuration interface further includes a video recording control;
a determination process for the target display content includes:
in response to a trigger operation for the video recording control, displaying a video recording page; and in response to a video recording operation triggered for the video recording page, generating video data to be used, and determining the target display content according to the video data to be used.

In a possible implementation, the configuration interface also displays an account configuration trigger control;
the method further includes:
in response to a trigger operation for the account configuration trigger control, displaying an account configuration page; and
in response to an account configuration operation triggered for the account configuration page, determining the content display account corresponding to the gift receiving account and displaying a sending confirmation page; and
the sending the target display configuration item to the gift receiving account to display the target display content on the gift receiving account according to the target display manner includes:
   in response to a sending confirmation operation triggered for the sending confirmation page, sending the target display configuration item to the content display account to display the target display content on the content display account according to the target display manner.

In a possible implementation, a determination process for the target display manner includes:
in response to a sending confirmation operation triggered for the sending confirmation page, in response to determining that the content display account satisfies a preset account condition, determining both a feed display manner and a message display manner as the target display manner; the feed display manner being: adding the target display content to a to-be-played information display feed corresponding to the content display account; and the message display manner being: adding a message corresponding to the target display content to a chat page corresponding to the content display account; and
in response to determining that the content display account does not satisfy a preset account condition, determining the message display manner as the target display manner.

In a possible implementation, the method further includes:
in response to determining that the content display account satisfies a preset account condition, displaying a push time configuration page; and
in response to a push time configuration operation triggered for the push time configuration page, determining a push time for the target display content;
the feed display manner being specifically: adding the target display content to a to-be-played information display feed corresponding to the content display account according to the push time.

In a possible implementation, the displaying a sending confirmation page includes:
displaying the sending confirmation page within a first region of the configuration interface, where a first prompt content is displayed in a second region of the configuration interface; and there is no overlap between the second region and the first region; and
the method further includes:
   in response to a sending confirmation operation triggered for the sending confirmation page, switching the first prompt content displayed in the second region to a second prompt content, and switching the sending confirmation page to a sending result prompt interface;
   in response to a trigger operation for the sending result prompt interface, displaying a chat display page and displaying a message corresponding to the object to be gifted in the chat display page; and
   in response to a trigger operation for the message, displaying the target display content corresponding to the object to be gifted.

In a possible implementation, the target display content includes video data and logistics state description information;
the method further includes:
in response to a trigger operation for the video data, displaying a video display page corresponding to the video data;
   or
in response to a trigger operation for the logistics state description information, displaying a logistics information display page corresponding to the object to be gifted;
   and/or
the method further includes:
   adjusting the account configuration trigger control from a non-triggerable state to a triggerable state after the target display content is determined.

In a possible implementation, in response to determining that there is no preset matching relationship between the content display account and the gift receiving account, the target display content includes a verification page and an object configuration display content; the verification page is configured to receive verification information entered using the content display account; and the object configuration display content is configured to display on the content display account according to the target display manner in response to determining that the verification information matches the target verification content corresponding to the gift receiving account.

In a possible implementation, the method further includes:
in response to a preset operation, displaying a gift object aggregation page;
the in response to a gifting operation request, determining an object to be gifted and a gift receiving account includes:
   in response to a gift object order operation triggered for the gift object aggregation page, determining the object to be gifted, and displaying an order display page; and
   in response to a gift receiving information input operation triggered for the order display page, determining the gift receiving account; and
   the displaying a configuration interface includes:
      in response to a resource value payment operation triggered for the order display page, displaying the configuration interface.

The present application further provides an interaction apparatus, including:
a first determination unit configured to, in response to a gifting operation request, determine an object to be gifted and a gift receiving account, and display a configuration interface, where the configuration interface includes a plurality of candidate display configuration items corresponding to the object to be gifted, and the plurality of candidate display configuration items include at least one candidate display manner and at least one candidate display content;
a second determination unit configured to, in response to a configuration operation triggered for the configuration interface, determine a target display configuration item, the target display configuration item including a target display manner and a target display content corresponding to the object to be gifted; and
an information sending unit configured to send the target display configuration item to the gift receiving account to display the target display content on the gift receiving account according to the target display manner.

The present application further provides an electronic device. The electronic device includes: a processor and a memory,
the memory is configured to store instructions or a computer program; and
the processor is configured to execute the instructions or computer program in the memory to cause the electronic device to perform the interaction method provided by the present application.

The present application also provides a computer-readable medium having instructions or a computer program stored therein, when the instructions or the computer program is run on a device, the device is caused to perform the interaction method provided by the present application.

The present application provides a computer program product, which includes a computer program carried on a non-transitory computer-readable medium, where the computer program includes program code for performing the interaction method provided by the present application.

In contrast to the prior art, the present application has at least the following advantages.

In the technical solution provided by the present application, for an electronic device, after the electronic device receives a gifting operation request, an object to be gifted and a gift receiving account are determined, and a configuration interface is displayed, where the configuration interface includes a plurality of candidate display configuration items corresponding to the object to be gifted, and these candidate display configuration items includes at least one candidate display manner (e.g., direct messaging mode or primary feed push mode) and at least one candidate display content (e.g., multiple blessing videos); after a configuration operation triggered for the configuration interface is received, a target display configuration item is determined, such that the target display configuration item includes a target display manner and a target display content corresponding to the object to be gifted; and finally, sending the target display configuration item to the gift receiving account to display the target display content on the gift receiving account according to the target display manner, so that a recipient can view the target display content by means of the gift receiving account, thereby allowing the recipient to at least be informed that a user of the electronic device (i.e., a giver) has gifted a present. This is beneficial for enhancing both gift sending experience of the giver and the gift receiving experience of the recipient.

### BRIEF DESCRIPTION OF THE DRAWINGS

In order to more clearly describe the technical solutions in the embodiments of the present application or in the prior art, the drawings for describing the embodiments or the prior art will be briefly described below. Apparently, the drawings in the description below show merely some embodiments recited in the present application, and persons of ordinary skill in the art may still derive other drawings from these drawings without creative efforts.
FIG. 1 is a flowchart of an interaction method according to the present application;
FIG. 2 is a schematic diagram of an interaction process according to the present application;
FIG. 3 is a schematic diagram of an interaction process according to the present application;
FIG. 4 is a schematic diagram of an interaction process according to the present application;
FIG. 5 is a schematic diagram of an interaction process according to the present application;
FIG. 6 is a schematic diagram of an interaction process according to the present application;
FIG. 7 is a schematic diagram of an interaction process according to the present application;
FIG. 8 is a schematic diagram of a structure of an interaction apparatus according to an embodiment of the present application; and
FIG. 9 is a schematic diagram of a structure of an electronic device according to an embodiment of the present application.

### DETAILED DESCRIPTION OF EMBODIMENTS

In practice, for some product gifting processes, when a giver places an order for a product, the giver only needs to write an address of a recipient as a delivery address, so that the product can be directly delivered to the recipient. However, these product gifting processes have the following flaws: if the giver does not inform the recipient in advance, when the recipient receives the product, their confusion about who the giver is may outweigh their feelings of pleasant surprise, leading to a poor gift receiving experience of the recipient.

Based on the content of the above paragraph, in order to better solve the technical problems presented in the background section, the present application provides an interaction method which may be specifically as follows: for an electronic device, after the electronic device receives a gifting operation request, an object to be gifted and a gift receiving account are determined, and a configuration interface is displayed, where the configuration interface includes a plurality of candidate display configuration items corresponding to the object to be gifted, and the candidate display configuration items include at least one candidate display manner (e.g., a direct messaging manner or a primary feed pushing manner), and at least one piece of candidate display content (e.g., a plurality of blessing videos); after a configuration operation triggered for the configuration interface is received, a target display configuration item is determined, such that the target display configuration item includes a target display manner and target display content corresponding to the object to be gifted; and finally, the target display configuration item is sent to the gift receiving account, to display the target display content on the gift receiving account in the target display manner, so that a recipient can view the target display content by means of the gift receiving account, thereby allowing the recipient to at least be informed that a user of the electronic device (i.e., the giver) has given a gift to the recipient. This is beneficial for enhancing both gift giving experience of the giver and the gift receiving experience of the recipient.

In addition, the present application does not limit the execution subject of the interaction method provided in the present application, for example, the interaction method provided in the present application may be applied to a terminal device or a server. For example, that interaction method provided herein may also be implemented by means of a data interaction process between a terminal device and a server. Herein, the terminal device may be a smartphone, a computer, a personal digital assistant (PDA) or a tablet. The server may be a stand-alone server, a cluster server, or a cloud server.

In order for persons skilled in the art to better understand the solutions of the present application, the technical solutions in the embodiments of the present application will be described below clearly and completely with reference to the accompanying drawings in the embodiments of the present application. Apparently, the embodiments described are merely some rather than all of the embodiments of the present application. All other embodiments obtained by persons of ordinary skill in the art based on the embodiments of the present application without creative efforts fall within the scope of protection of the present application.

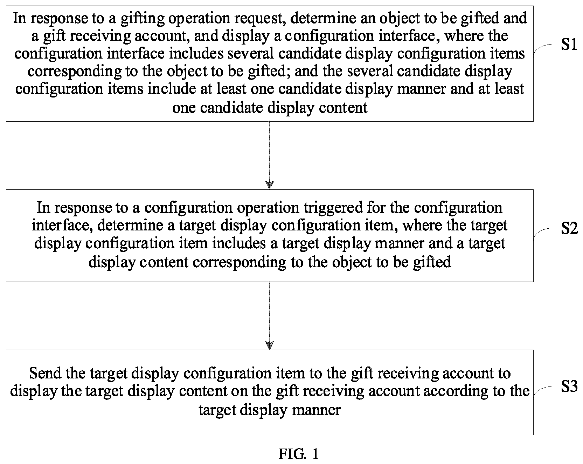

For a better understanding of the technical solution provided by the present application, the interaction method provided by the present application is described below in conjunction with some drawings. As shown in FIG. 1, an interaction method according to an embodiment of the present application includes the following steps S1 to S3. FIG. 1 is a flowchart of an interaction method according to the present application.

S1: In response to a gifting operation request, determine an object to be gifted and a gift receiving account, and display a configuration interface, where the configuration interface includes a plurality of candidate display configuration items corresponding to the object to be gifted, and the plurality of candidate display configuration items include at least one candidate display manner and at least one piece of candidate display content.

The gifting operation request is used to request that the object to be gifted be given as a gift to a recipient, and the gifting operation request is triggered by a giver. In addition, the manner of triggering the above gifting operation request is not limited in the present application, for example, the triggering manner may be implemented using any existing or future request capable of triggering the gifting process. For example, the triggering manner may also be implemented in a request trigger manner presented in steps 11 to 13 below.

The object to be gifted refers to an object purchased by the giver, and intended to be given as a gift to the recipient. Additionally, the object is not limited in the present application; for example, the object may be a purchasable item (e.g., a cup) or a service that can be enjoyed (e.g., a haircut or hot pot delivery service).

The gift receiving account is used to identify the recipient, and the implementation of the gift receiving account is not limited in the present application. For example, when the interaction method provided in the present application is applied to a platform that offers an object purchase function (e.g., a platform corresponding to a client), the gift receiving account may refer to a user account (e.g., contact information) of the recipient that is input by the giver into the platform (e.g., the order display page mentioned later), and the giver agrees to the platform obtaining the user account of the recipient.

It should be noted that the present application does not limit the process of determining the object to be gifted and the gift receiving account, for example, the process may be implemented using any existing or future method capable of obtaining information about the gift to be given and the recipient.

In practice, in order to better improve the user experience, the present application also provides the process of determining the object to be gifted and the gift receiving account, which may specifically include steps 11 to 13 below.

Step 11: In response to a preset operation, display a gift object aggregation page.

The gift object aggregate page is used to display a selection of objects that users can choose from to order as gifts, allowing users to select one or more objects from the gift object aggregate page as gifts for others. It can be understood that the objects displayed on the gift object aggregation page can all respond to the trigger operation of the gifting operation request to be used as the object to be gifted. In addition, the manner of displaying the objects on the gift object aggregation page is not limited in the present application, for example, the objects may be displayed using product cards, live videos, and other manners. In addition, the implementation of the gift object aggregation page is not limited in the present application.

The preset operation is used to trigger a gift selection and giving process; and the preset operation is not limited in the present application, and for ease of understanding, the following description is made in connection with three cases.

Case 1: When the interaction method provided by the present application is applied to a client, the user can enter the gift object aggregation page by searching for a preset keyword in the client, allowing them to select a gift they wish to give on the gift object aggregation page.

It can be seen that in some application scenarios, when the interaction method provided by the present application is applied to a client, the "preset operation" mentioned above may specifically refer to a search operation triggered in the client for the preset keyword. The preset keyword has a correspondence with the gift object aggregation page mentioned above, allowing the gift object aggregation page to be presented to the user as a search result corresponding to the preset keyword.

Case 2: When the interaction method provided by the present application is applied to a client that offers a video feed playing function, if an entry to the gift object aggregation page is displayed on a piece of video data in the video feed, the user may enter the gift object aggregation page by performing a trigger operation for the entry (e.g., a click operation) when they see the video data, allowing the user to select the gifts they wish to give on the gift object aggregation page. It should be noted that the implementation of the entry is not limited in the present application; for example, the entry may be a control, or an area that can be triggered with a certain gesture, allowing the trigger operation for the entry to be executed through the gesture. For example, when the video feed includes a plurality of short videos, the entry may refer to an anchor point set within a short video, allowing the user to jump to the gift object aggregation page by clicking on the anchor point.

It can be learned that, in some application scenarios, when the interaction method provided by the present application is applied to a client that offers a video feed playing function, and an entry to the gift object aggregation page is displayed on preset video data in the video feed, the "preset operation" mentioned above may specifically refer to a trigger operation (e.g., a click operation) for the entry displayed for the preset video data. The preset video data refers to preset video data used to display the entry to the gift object aggregation page.

Case 3: When the interaction method provided by the present application is applied to a client that offers some live videos for the user to watch, if an entry to the gift object aggregation page is displayed on a live video, the user can enter the gift object aggregation page by performing a trigger operation for the entry when they see the live video, allowing them to select the gifts they wish to give on the gift object aggregation page.

It can be learned that, in some application scenarios, when the interaction method provided by the present application is applied to a client that offers some live videos for the user to watch, and an entry to the gift object aggregation page is displayed on a preset live video among the live videos, the "preset operation" mentioned above may specifically refer to a trigger operation for the entry displayed for the preset live video. The preset live video refers to live video data that displays the entry to the gift object aggregation page.

Based on the above three cases, it can be learned that the above preset operation may be different in different application scenarios, so the preset operation may be set based on the actual application scenario.

Based on the content related to step 11 mentioned above, it can be learned that for the giver, when they wish to select a gift for the recipient using a client, the gift object aggregation page corresponding to the preset operation triggered by the giver is directly displayed after the client receives the preset operation, such that the gift object aggregation page displays a large number of selectable objects to the giver, enabling them to choose a gift for the recipient from the objects.

Step 12: In response to a gift object order operation triggered for the gift object aggregation page, determine the object to be gifted, and display an order display page.

The gift object ordering operation is used to trigger an ordering process for an object displayed on the gift object aggregation page; and the gift object ordering operation is not limited in the present application; for example, it may be implemented using any existing or future operation that enables ordering for a purchasable object.

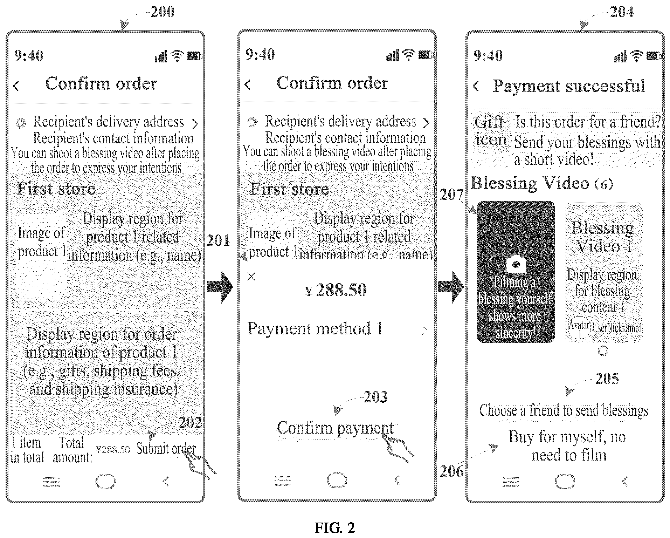

The order display page is used to display the order details of the object to be gifted mentioned above (e.g., the delivery address, a recipient identifier, and a resource value required to purchase the object to be gifted); and the implementation of the order display page is not limited in the present application; for example, the order display page may be a page 200 shown in FIG. 2.

It should be noted that for the page 200 shown in FIG. 2, the page 200 not only displays order detail information such as the delivery address, the recipient identifier, and the resource value required to purchase the object to be gifted, but also displays information that highlights a gifting scenario. For example, the page 200 displays a prompt message stating, "You can shoot a blessing video after placing the order to convey your feelings to the recipient."

Based on the content related to step 12 mentioned above, it can be learned that for an electronic device, when the electronic device is displaying the gift object aggregation page, after the electronic device receives the gift object ordering operation triggered for the page, the object for which the gift object ordering operation is performed (e.g., a product 1 shown in FIG. 2) may be determined as the object to be gifted. The order display page corresponding to the object (e.g., a page 200 in FIG. 2) may then be displayed, allowing the giver to fill in information (e.g., the delivery address) related to the recipient for the object on the order display page.

Step 13: In response to a gift receiving information input operation triggered for the order display page, determine the gift receiving account.

The gift receiving information input operation is used to input relevant information (e.g., address and contact information) of the recipient into the order display page mentioned above; and the gift receiving information input operation is not limited in the present application.

Based on the content related to steps 11 to 13 mentioned above, it can be learned that in some application scenarios, when the interaction method provided by the present application is applied to a client, the client may display the gift object aggregation page in response to the preset operation, which allows the gift object aggregation page to display selectable gifts to the giver. Subsequently, after the client receives the gift object ordering operation triggered on the gift object aggregation page, the order display page for the object to be gifted indicated by the ordering operation is displayed, such that the giver fills in information (e.g., address and contact information) related to the recipient on the order display page. In such a manner, the process of the giver giving a gift to the recipient can be implemented.

In practice, in order to enhance user experience, the giver can not only purchase a gift for the recipient but also send some information related to the gift (e.g., a blessing video) using a means, such that the recipient is informed in advance about the gift and related information (e.g., blessings and logistics) of the gift. Therefore, to better meet the need, the present application provides a configuration interface (e.g., a page 204 shown in FIG. 2), enabling the giver to configure information related to the object to be gifted (e.g., blessing videos) through the configuration interface.

In addition, the timing of displaying the configuration interface mentioned above is not limited in the present application; for example, the configuration interface may be displayed either before or after the payment for the object to be gifted. It can be learned that, in a possible implementation, the timing of displaying the configuration interface may be specifically as follows: when the order display page corresponding to the object to be gifted (e.g., the page 200 in FIG. 2) is being displayed, the configuration interface (e.g., the page 204 in FIG. 2) may be displayed in response to a resource value payment operation triggered for the order display page (e.g., a sequence of operations shown in FIG. 2, involving: a click on a control 202 → a click on a control 203 on a payment confirmation page 201). The resource value payment operation is used to complete the resource payment process for the object to be gifted.

Furthermore, the implementation of the configuration interface mentioned above is not limited in the present application; for example, in order to enhance user experience, the configuration interface may include a plurality of candidate display configuration items corresponding to the object to be gifted, such that the candidate display configuration items are used to configure information related to the object to be gifted (e.g., blessing videos and a display manner of the blessing videos).

Furthermore, the implementation of the "a plurality of candidate display configuration items" mentioned above is not limited in the present application; for example, the plurality of candidate display configuration items may include at least one candidate display manner (e.g., a manner of direct messaging and a manner of displaying via feeds) and at least one piece of candidate display content (e.g., cards with blessing text, or a plurality of blessing videos as shown in the page 204 of FIG. 2). Each piece of candidate display content is a piece of example content (or template content, etc.) that carries preset type information (e.g., a preset blessing message), allowing the giver to select content that meets their expression needs from the candidate display content, so that the giver can express their gifting intentions (e.g., blessings and other intentions) to the recipient using the selected candidate display content later on. The candidate display manner refers to a display manner used to present the relevant information configured for the object to be gifted (i.e., the display content) to the recipient.

For the "at least one candidate display manner" mentioned above, the "at least one candidate display manner" is not limited in the present application; for example, the at least one candidate display manner may be a manner of direct messaging, a manner of displaying via a feed, or a manner of displaying through a search using a password link. It should be noted that the implementation of the password link is not limited in the present application.

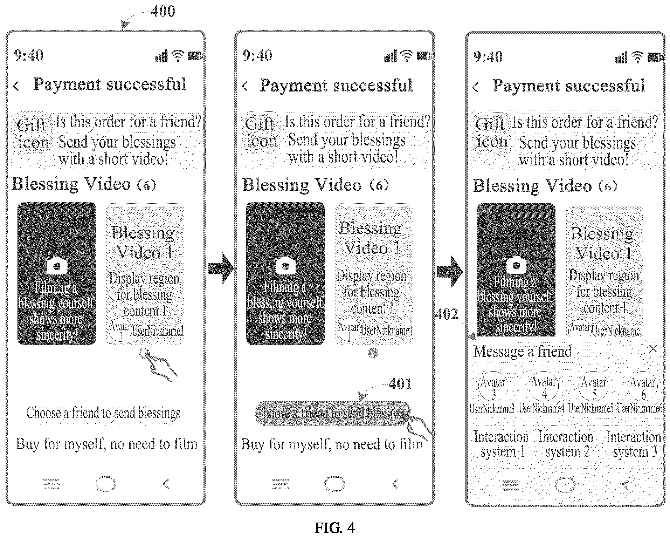

It should also be noted that, in an implementation, when the interaction method provided by the present application is applied to a preset platform that offers an object purchasing function, if the gift receiving account is a registered account on the preset platform, the candidate display manner may include: a manner of direct messaging and a manner of displaying via a feed; and if the gift receiving account is not a registered account on the preset platform, the candidate display manner may involve generating a corresponding password link and redirecting to an interface of a user-specified application (e.g., any of systems in the interaction systems 1 to 3 shown in a page 402 of FIG. 4) to paste the password link, such that the recipient views the display content corresponding to the object to be gifted through the password link.

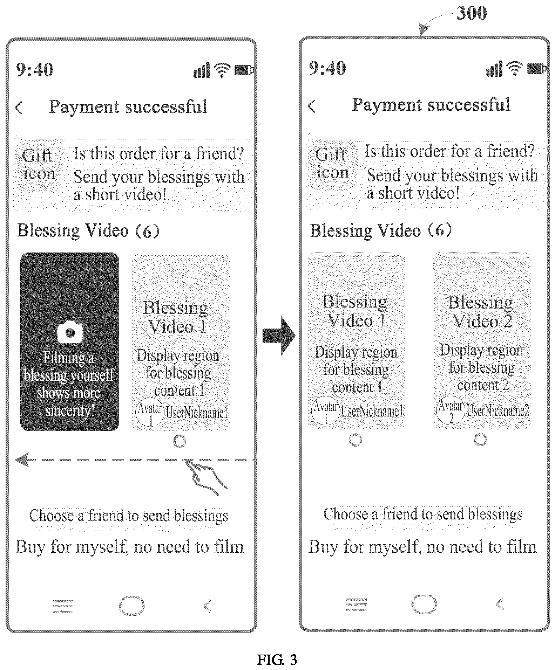

For the "at least one candidate display content" mentioned above, the implementation of the "at least one candidate display content" is not limited in the present application; for example, in some application scenarios, the "at least one candidate display content" may include a plurality of pieces of candidate video data (e.g., a plurality of blessing videos shown in the page 204 of FIG. 2 and a plurality of blessing videos shown in a page 300 of FIG. 3). Additionally, the process of determining the plurality of pieces of candidate video data is not limited in the present application; for example, in order to enhance user experience, the process of determining the plurality of pieces of candidate video data may specifically involve: determining a plurality of pieces of candidate video data corresponding to the object to be gifted based on at least one of the following: a type of the object to be gifted (e.g., having an implied meaning), a delivery time of the object to be gifted (e.g., being close to a holiday), and an associated account corresponding to the object to be gifted (e.g., a merchant account), so that the candidate video data can meet the needs of the giver for expressing gifting intentions as much as possible. The associated account satisfies a preset association relationship with the object to be gifted, and the preset association relationship may be preset.

It should be noted that the "type of the object to be gifted" mentioned above is used to indicate the classification of the object to be gifted, and is not limited in the present application; for example, the type of the object to be gifted may include an implied meaning type corresponding to the object to be gifted (i.e., an implied meaning of the object). The "delivery time of the object to be gifted" refers to a time when the object to be gifted arrives at the delivery address of the recipient, allowing for the recipient to infer which holiday the object to be gifted may correspond to based on the "delivery time of the object to be gifted". The "associated account corresponding to the object to be gifted" mentioned above refers to a user account that meets the preset association relationship with the object to be gifted, and the associated account is not limited in the present application; for example, the associated account may be a merchant account that provides the object to be gifted, or user accounts of some users (e.g., influencers) who have purchased the object to be gifted, or user accounts of some users (e.g., celebrities or endorsers) who recommend the object to be gifted.

Based on the content of the above two paragraphs, it can be learned that in some application scenarios, after determining the object to be gifted, some video data related to the object to be gifted may be determined as the plurality of pieces of candidate video data corresponding to the object to be gifted; and the candidate video data may be determined from the four types of video data described in items 1 to 4, so that the candidate video data can meet the needs of the giver for expressing gifting intentions as much as possible.
1. Some blessing video data associated with one or more types of the object to be gifted. For example, blessing video data associated with an implied meaning expressed by the object to be gifted, enabling the blessing videos to meet the needs of the giver for implied meaning selection.
2. Some blessing video data associated with one or more holidays that are close to the delivery time of the object to be gifted, enabling the blessing videos to meet the targeted needs of the giver for holidays.
3. Some blessing video data provided in advance by the merchant account of the object to be gifted specifically for the object to be gifted.
4. Some blessing video data recorded and provided by some users (e.g., influencers) specifically for the object to be gifted.

Based on the relevant content of S1 described above, it can be learned that for an electronic device, after the electronic device receives the gifting operation request, the object to be gifted (e.g., the product 1 shown in FIG. 2) and the gift receiving account are determined, and the configuration interface (e.g., the page 204 in FIG. 2) is displayed, so that the recipient can use the configuration interface to configure prompt information related to the object to be gifted (e.g., blessing videos and the display manner of the blessing videos).

S2: In response to a configuration operation triggered for the configuration interface, determine a target display configuration item, where the target display configuration item includes a target display manner and target display content corresponding to the object to be gifted.

The configuration operation is used to indicate the configuration process for the object to be gifted mentioned above; and the configuration operation is not limited in the present application.

The target display configuration item is used to indicate what information the giver has configured for the object to be gifted. The target display configuration item may include the target display manner corresponding to the object to be gifted, and the target display content corresponding to the object to be gifted. To facilitate understanding, the following section will introduce the relevant content of the target display manner and the target display content separately.

The "target display manner" refers to the display method configured for the object to be gifted, allowing the subsequent target display content to be presented to the recipient according to that target display manner.

In addition, the present application does not limit the target display manner; for example, it can be implemented using any of the implementations of the target display manner described below.

Furthermore, the present application does not limit the determination process of the target display manner; for instance, it can also be implemented using relevant controls with display manner configuration functionality deployed in the configuration interface. For another example, it can be implemented using the determination process of the target display manner described in steps 41 and 42 below.

The "target display content" refers to the display content configured for the object to be gifted, allowing the recipient to understand that the giver has presented a gift to them and the intentions expressed by that gift after seeing the target display content.

In addition, the present application does not limit the target display content; for example, it can include at least the blessing video 1 shown in FIG. 2 or the blessing video 2 shown on page 300 in FIG. 3. Additionally, to enhance user experience, the target display content can include at least video data (such as the blessing video 1 shown in FIG. 2) and logistics state description information corresponding to the object to be gifted. Herein, the logistics state description information can indicate the logistics state in which the object to be gifted is in real time. It should be noted that the dashed arrows in FIG. 3 are used to indicate a left swipe operation.

In addition, the present application does not limit the determination process of the target display content, and for ease of understanding, two examples are described below.

Example 1: When the "at least one candidate display content" includes a plurality of candidate video data (i.e., a plurality of candidate video data are displayed on the configuration interface), the determination process of the target display content can specifically be as follows: in response to a selection operation on the target video data among the plurality of candidate video data (e.g., a click operation on the checkbox corresponding to the blessing video 1 shown on page 400 in FIG. 4), the target display content is determined based on that target video data, so that the target display content includes the selected target video data. Herein, the target video data is the selected candidate video data.

It can be seen that, in some application scenarios, for an electronic device, when a configuration interface corresponding to the object to be gifted is displayed on the electronic device (e.g., page 400 in FIG. 4), and a plurality of candidate video data are shown on that configuration page, after the electronic device receives a selection operation on the target video data among these candidate video data, the target display content corresponding to the object to be gifted can be determined based on that target video data. This allows the target display content to include the target video data, enabling the recipient to understand the giver's gifting intentions from that target video data when the target display content is subsequently presented to them.

Example 2: When the configuration interface also includes a video recording control, the determination process of the target display content can specifically include the following steps 21 and 22.

Step 21: In response to a trigger operation for the video recording control, display a video recording page.

Herein, a video recording control is used to trigger a recording process for video data, and the present application does not limit the video recording control, which, for example, may be the control 207 in FIG. 2.

In addition, the present application does not limit the trigger operation of the video recording control, which may be, for example, a click operation.

A video recording page refers to a page for providing a video recording function; and the present application does not limit the video recording page.

Step 22: In response to a video recording operation triggered for the video recording page, generate video data to be used, and determine the target display content according to the video data to be used, such that the target display content includes the video data to be used.

Herein, a video recording operation refers to an operation or sequence of operations that need to be triggered during recording of a video data; and the present application does not limit the video recording operation.

Video data to be used is video data recorded with the above video recording operations.

Based on the relevant content of steps 21 to 22 above, it can be seen that in some application scenarios, when the configuration interface is displayed on the electronic device, the giver can not only select a video data from the multiple video data presented on that interface but also record a video data using that page, so that this recorded video data can better express the giver's gifting intentions, allowing it to be sent to the recipient as a blessing video later on, which helps enhance user experience.

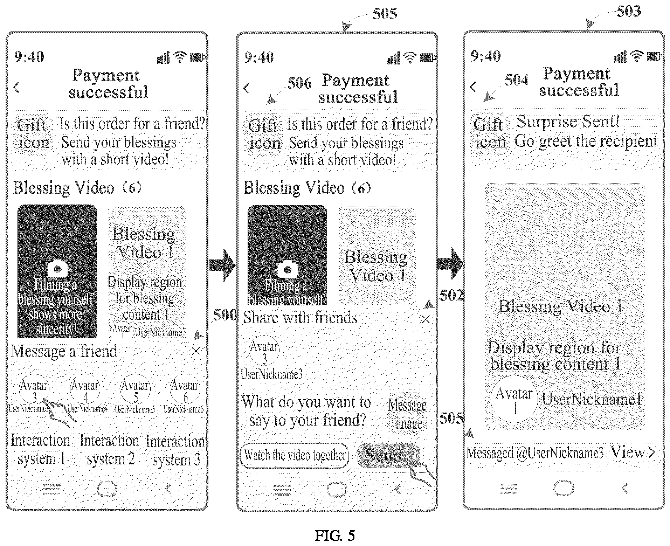

Based on the relevant content of S2 above, it can be seen that, for an electronic device, when a configuration interface corresponding to an object to be gifted is being presented on the electronic device, after the electronic device receives a configuration operation triggered on that configuration interface (e.g., the sequence of operations shown in FIGS. 4 and 5), the target display configuration item can be determined based on the configuration operation. This allows the target display configuration item to include the target display manner and target display content corresponding to the object to be gifted, enabling the target display content to be presented to the recipient of the object to be gifted according to the target display manner later on. This ensures that the recipient can obtain relevant information about the gift from the target display content (e.g., the giver's intentions and logistics).

S3: Send the target display configuration item to the gift receiving account to display the target display content on the gift receiving account according to the target display manner.

In an embodiment of the present application, for an electronic device, after the electronic device acquires the target display configuration item, the electronic device may send the target display configuration item to the gift receiving account, so that that that gift receiving account can display the target display content in the target display manner, so that the recipient that the gift receiving account represents can learn from the target display content about the giver's gifts (e.g., the giver's intentions and logistics).

In addition, the present application does not limit the target display manner, which, for example, can specifically involve: adding the target display content to the to-be-played information display feed corresponding to the gift receiving account, with the target display content positioned at a preset arrangement position within that to-be-played information display feed. This enables the recipient represented by the gift receiving account to see the target display content at the preset arrangement position within the to-be-played information display feed. Herein, the to-be-played information display feed refers to the stream of information (e.g., video feeds) that can be played and displayed on a client logged in with that gift receiving account; and the present application does not limit the to-be-played information display feed. The preset arrangement position can be established in advance; for example, it can be the 2nd position, meaning that the recipient can see the target display content within the second displayed information data (e.g., video data) in the to-be-played information display feed. To facilitate understanding, the following will provide explanations in conjunction with examples.

As an example, it is assumed that: the interaction method provided by the present application is applied to a platform that offers the ability to purchase objects (e.g., a specific client). The giver places an order for the object to be gifted on that platform and fills in the gift receiving account (e.g., the recipient's mobile number) in the contact information section of the order display page corresponding to the object to be gifted. The recipient can then log into the platform using that gift receiving account (e.g., by logging into the platform with a registered account associated with that gift receiving account). That is, for the platform mentioned above, after the recipient logs into the platform using the gift receiving account, the platform can present the to-be-played information display feed (e.g., a short video stream, etc.) to the recipient, allowing them to view each piece of information data (e.g., short video data) displayed sequentially in the to-be-played information display feed.

Based on the above assumption, when the to-be-played information display feed is a video data sequence of {1st short video, 2nd short video, 3rd short video, ..., Yth short video}, and the preset arrangement position is the 3rd position, after obtaining the target display content, the target display content can be added to the 3rd position in the to-be-played information display feed. This results in a new to-be-played information display feed of {1st short video, 2nd short video, target display content, 3rd short video, ..., Yth short video}, allowing the platform to present this new to-be-played information display feed to the recipient after they log in using the gift receiving account. As a result, the recipient can view the new to-be-played information display feed in the order of 1st short video → 2nd short video → target display content → 3rd short video → ... → Yth short video. This achieves the goal of having the recipient suddenly see the target display content while watching the new to-be-played information display feed, thereby enhancing their sense of surprise.

As can be seen from the above related contents of S1 to S3, for the interaction method provided in the embodiment of the present application, after the electronic device receives a gifting operation request, an object to be gifted and a gift receiving account are determined, and a configuration interface is displayed, where the configuration interface includes a plurality of candidate display configuration items corresponding to the object to be gifted, and these candidate display configuration items includes at least one candidate display manner (e.g., direct messaging manner or primary feed push manner) and at least one candidate display content (e.g., multiple blessing videos); after a configuration operation triggered for the configuration interface is received, a target display configuration item is determined, such that the target display configuration item includes a target display manner and a target display content corresponding to the object to be gifted; and finally, sending the target display configuration item to the gift receiving account to display the target display content on the gift receiving account according to the target display manner, so that a recipient can view the target display content by means of the gift receiving account, thereby allowing the recipient to at least be informed that a user of the electronic device (i.e., a giver) has gifted a present. This is beneficial for enhancing both gift sending experience of the giver and the gift receiving experience of the recipient.

In practice, to further improve user experience, the giver can also use the configuration interface mentioned above to configure the user account (i.e., the display account for that target display content) for displaying the target display content. Based on this, the present application also provides another possible implementation of the aforementioned interaction method. In this implementation, when an account configuration trigger control (e.g., control 205 in FIG. 2) is also displayed on the configuration interface, the interaction method can include at least the following steps 31-33. Herein, the execution time of step 31 is later than the execution time of S1 above.

Step 31: After displaying the configuration interface corresponding to the object to be gifted, in response to a trigger operation for the account configuration trigger control within the configuration interface, display the account configuration page.

Herein, the account configuration trigger control is used to initiate the configuration process for the display account of the target display content, and the present application does not limit this account configuration trigger control; for example, it can be the control 205 shown in FIG. 2.

In addition, the present application does not limit the trigger operation for the account configuration trigger control, which may be a click operation, for example.

In practice, to further enhance user experience, the present application also provides a possible implementation of the account configuration trigger control, which can specifically involve: after determining the target display content corresponding to the object to be gifted, the account configuration trigger control is adjusted from a non-triggerable state (e.g., the state of control 205 shown in FIG. 2) to a triggerable state (e.g., the state of control 401 shown in FIG. 4). In the non-triggerable state, the account configuration trigger control cannot respond to user trigger operations or can only respond with preset prompt information (such as "Please select a blessing video first"). In the triggerable state, the account configuration trigger control can utilize the account configuration page to respond to user trigger operations.

It can be seen that, in some application scenarios, for an electronic device, when the device is displaying the configuration page corresponding to the object to be gifted, if the giver has not yet configured the target display content for the object to be gifted, the account configuration trigger control displayed on that configuration page remains in a non-triggerable state, preventing the giver from using the account configuration trigger control to configure the information display account for the object to be gifted. However, when the giver has configured the target display content, the account configuration trigger control displayed on the configuration page can be adjusted from a non-triggerable state to a triggerable state. This allows the giver to use the account configuration trigger control to configure the information display account corresponding to the object to be gifted, so that the configured information display account can be used to present the target display content. This effectively avoids negative impacts caused by erroneous operations (such as triggering the friend account selection process without selecting a blessing video first), thereby enhancing user experience.

The above "account configuration page" is used to provide account configuration services to giver, and the present application does not limit the account configuration page, which may be, for example, page 402 shown in FIG. 4.

Step 32: In response to an account configuration operation triggered for the account configuration page, determine the content display account corresponding to the gift receiving account and display a sending confirmation page.

Herein, the account configuration operation is used to indicate the account configuration process performed by the giver on the account configuration page, and the present application does not limit this account configuration operation. To facilitate understanding, the following will explain this in the context of two cases.

Case 1: When the interaction method provided by the present application is applied to a certain client, if the account configuration page displays some friend accounts associated with the giver on that client (e.g., the account with avatar 3 and user nickname 3 shown in page 402 of FIG. 4), the account configuration operation may refer to the selection operation targeting one or more of these friend accounts (e.g., the selection operation shown on page 500 in FIG. 5).

Case 2: When the interaction method provided by the present application is applied to a certain client, if the account configuration page displays some other interaction systems (e.g., instant messaging systems), the account configuration operation mentioned above can include the following sequence of operations: selection operation for a specific interaction system among these interaction systems to display the access link corresponding to that interaction system- copy operation for that access link → open operation for that interaction system → paste operation triggered in a chat window of that interaction system → return operation to the client, etc. It should be noted that the present application does not limit the content related to these interaction systems or the like.

The phrase "content display account corresponding to the gift receiving account" refers to the display account configured by the giver for the target display content; moreover, the present application does not limit the content display account; for example, it can be the account shown on page 500 in FIG. 5, which has avatar 3 and user nickname 3 and is selected by the user.

The "sending confirmation page" is used to allow the giver to confirm whether to send the target display content to the "content display account corresponding to the gift receiving account." Additionally, the present application does not limit the sending confirmation page; for example, it can be the page 502 shown in FIG. 5.

Moreover, the present application does not limit the display manner of the "sending confirmation page"; for example, it can specifically involve: displaying the sending confirmation page in the first region of the configuration interface corresponding to the object to be gifted, while the second region of that configuration interface displays first prompt content, with no overlap between the first region and second region. Herein, the first region refers to the region in the configuration interface used to display the sending confirmation page, and the present application does not limit the first region; for example, when the configuration interface is page 505 in FIG. 5 and the sending confirmation page is page 502 in FIG. 5, the first region can refer to the region occupied by page 502 within page 505. The second region refers to the region in the configuration interface used to display certain prompt content, and the present application does not limit the second region; for example, it can refer to region 506 in FIG. 5. The first prompt content refers to the preset content used to inform the giver that they can express their intentions through the blessing video, and the present application does not limit this first prompt content; for example, it can be the text content shown in region 506 of FIG. 5.

Step 33: In response to a sending confirmation operation triggered for the sending confirmation page, send the target display configuration item to the content display account to display the target display content on the content display account according to the target display manner.

Herein, sending confirmation operation is used to indicate that the giver has confirmed sending the target display content to the "content display account corresponding to the gift receiving account"; and the present application does not limit the sending confirmation operation; for example, it can be the trigger operation on the confirmation trigger control in the sending confirmation page (e.g., a click operation on the send control shown on page 502 in FIG. 5).

Based on the relevant content of steps 31 to 33 above, it can be understood that in certain application scenarios, for an electronic device, not only can the electronic device determine the target display manner and target display content based on some operations of the giver, but it can also determine the display account for the target display content based on other operations of the giver. This can meet the giver's need to specify the display account for the target display content, thereby enhancing the gifting experience for the giver.

In practice, to further improve user experience, the present application also provides a determination process for the target display manner, which can specifically include the following steps 41 and 42.

Step 41: In response to a sending confirmation operation triggered for the sending confirmation page, in response to determining that the content display account satisfies a preset account condition, determine both a feed display manner and a message display manner as the target display manner.

Herein, a preset account condition refers to a condition established in advance; for example, when the interaction method provided by the present application is applied to a certain client, this preset account condition can specifically involve: the content display account is an account registered on the platform corresponding to the client (i.e., the content display account can be a user account displayed on page 402 in FIG. 4).

The feed display manner refers to a method of presentation that utilizes a certain feed (e.g., a short video stream containing a sequence of short video data). It can be seen that the feed display manner can specifically involve: adding the target display content to the to-be-played information display feed corresponding to the content display account, allowing the recipient to view the target display content within the to-be-played information display feed associated with the content display account.

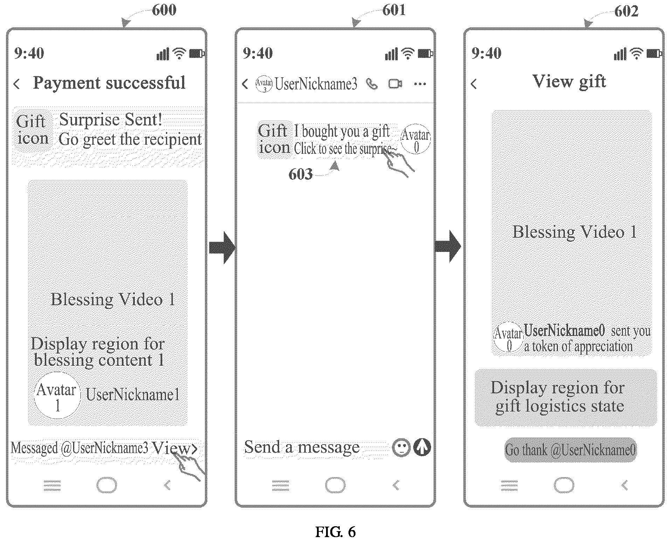

The message display manner refers to a method of presentation that utilizes chat messages for display. It can be seen that the message display manner can specifically involve: adding the message corresponding to the target display content to the chat page associated with the content display account, allowing the recipient to view the target display content within the chat page corresponding to the content display account. In addition, the present application does not limit the chat page, for example, it may be a direct message chat page 601 similar to that shown in FIG. 6.

Step 42:In response to determining that the content display account does not satisfy a preset account condition, determine the message display manner as the target display manner.

Based on the relevant content of steps 41 to 42 above, it can be understood that when the interaction method provided by the present application is applied to a certain client, after obtaining the content display account, it can be determined whether that content display account belongs to a user account under that client. If it does, then not only can the target display content be sent as a message to the chat page corresponding to the content display account, but the target display content can also be inserted into the to-be-played information display feed associated with the content display account. This allows the recipient to view the target display content through both the chat messages and the to-be-played information display feed under that content display account. Such an approach enhances the recipient's sense of surprise, thereby improving the overall user experience.

In practice, to further enhance user experience, the giver can also configure the push time of the target display content in the to-be-played information display feed corresponding to the content display account. Based on this, the present application also provides a determination process for the information flow display manner, which can specifically include the following steps 51-53.

Step 51: In response to determining that the content display account satisfies a preset account condition, display a push time configuration page.

Herein, the push time configuration page is used to provide the giver with the functionality to configure the push time for the target display content in the feed. In addition, the present application does not limit the implementation of the push time configuration page.

Step 52: In response to a push time configuration operation triggered for the push time configuration page, determine a push time for the target display content.

Herein, the push time configuration page is used to provide the giver with the functionality to configure the push time for the target display content in the feed; and the present application does not limit the push time configuration operation.

Step 53: Based on the push time, determine the feed display manner, such that the feed display manner specifically involves: adding the target display content to the to-be-played information display feed corresponding to the content display account according to the push time.

Based on the relevant content of steps 51 to 53 mentioned above, it can be understood that in certain application scenarios, the giver can also set the push time of the target display content in the feed. This allows the target display content to be presented to the recipient according to the date anticipated by the giver, effectively meeting the giver's needs regarding the display timing of that target display content. This, in turn, enhances the giver's gifting experience.

In practice, to further enhance user experience, the giver can also view the target display content in the corresponding chat page. Based on this, the present application also provides a possible implementation of the interaction method. In this implementation, when the sending confirmation page is displayed in the first region of the configuration interface corresponding to the object to be gifted, and second prompt content is displayed in the same region, the interaction method can include at least the following steps 61-63.

Step 61: In response to a sending confirmation operation triggered for the sending confirmation page, switch the first prompt content displayed in the second region of the configuration interface to a second prompt content, and switch the sending confirmation page to a sending result prompt interface.

Herein, the second prompt content refers to preset content that is different from the first prompt content; for example, the second prompt content can refer to the text content shown in region 504 in FIG. 5.

The sending result prompt interface is used to display the sending status of the target display content to the giver (e.g., whether the sending was successful), and the present application does not limit this sending result prompt interface; for example, it can be the interface shown in page 505 in FIG. 5.

Step 62: In response to a trigger operation for the sending result prompt interface, display a chat display page and display a message corresponding to the object to be gifted in the chat display page.

Herein, the chat display page is used to display the interaction process between the giver's corresponding user account and the content display account, and the present application does not limit this chat display page; for example, it can be page 601 shown in FIG. 6.

Additionally, the present application does not limit the triggering manner of the chat display page. For instance, when the sending result prompt interface displays a chat view control (such as the view control shown in page 600 in FIG. 6), the triggering manner for the chat display page can specifically involve: in response to a trigger operation on the chat view control (e.g., a click operation), displaying the chat display page (e.g., page 601 in FIG. 6).

The phrase "message corresponding to the object to be gifted" is used to trigger the display process for the target content corresponding to that object to be gifted, and the present application does not limit this "message corresponding to the object to be gifted"; for example, it can be the message 603 shown in FIG. 6.

Step 63: In response to a trigger operation for the message corresponding to the object to be gifted, display the target display content corresponding to the object to be gifted.

It should be noted that the present application does not limit the "in response to a trigger operation on the message corresponding to the object to be gifted"; for example, it can be a click operation.

Additionally, the present application does not limit the display manner of the "target display content corresponding to the object to be gifted"; for example, it can be displayed using page 602 shown in FIG. 6.

Furthermore, to better enhance user experience, the present application also provides a possible working principle for the target display content in the display state (e.g., page 602 in FIG. 6). When the target display content includes video data and logistics status description information, this working principle can specifically include the following steps 71 or 72.

Step 71: In response to a trigger operation for the video data in the target display content, display a video display page corresponding to the video data.

The "video data in the target display content" refers to the video data configured by the giver for the object to be gifted (e.g., the blessing video 1 shown in page 204 in FIG. 2).

The "video display page corresponding to the video data" is used for full-screen to-be-played of that video data; and the present application does not limit the implementation of the "video display page corresponding to the video data".

Based on the relevant content of step 71, it can be seen that for an electronic device, when the target display content (e.g., page 602 in FIG. 6) is being displayed on that device, after the device receives a trigger operation on the video data within that target display content (e.g.,, a click operation), it presents the video display page corresponding to that video data. This allows the video data to be displayed in full screen on the video display page, facilitating better viewing of the video data by the user, thereby enhancing the overall user experience.

Step 72: In response to a trigger operation for the logistics state description information in the target display content, display a logistics information display page corresponding to the object to be gifted.

Herein, the logistics state description information is used to briefly describe the logistics state of the object to be gifted, and the present application does not limit the implementation of the logistics state description information.

The logistics information display page is used to provide detailed information regarding the logistics of the object to be gifted, and the present application does not limit the implementation of the logistics information display page.

Based on the relevant content of step 72, it can be understood that for the electronic device, when the target display content (e.g., page 602 in FIG. 6) is being displayed on that device, after the device receives a trigger operation on the logistics state description information within the target display content (e.g., a click operation), it presents the logistics information display page corresponding to the object to be gifted. This page is designed to provide as much detailed logistics-related information as possible concerning the object to be gifted, allowing the user to better understand the transportation status of the object, thereby enhancing the overall user experience.

Based on the relevant content of steps 61 to 63, it can be understood that for the electronic device, when the configuration interface corresponding to the object to be gifted is being displayed on the electronic device, and the sending confirmation page is shown on that configuration interface, after the electronic device receives a sending confirmation operation triggered by that sending confirmation page, it will not only send the target display content to the relevant account corresponding to the recipient but will also switch the sending confirmation page on that configuration interface to the sending result prompt interface. This allows the giver to view the message corresponding to the object to be gifted on the sending result prompt interface, enabling the giver to assess the display effect of the target display content through that message, thereby enhancing the overall user experience.

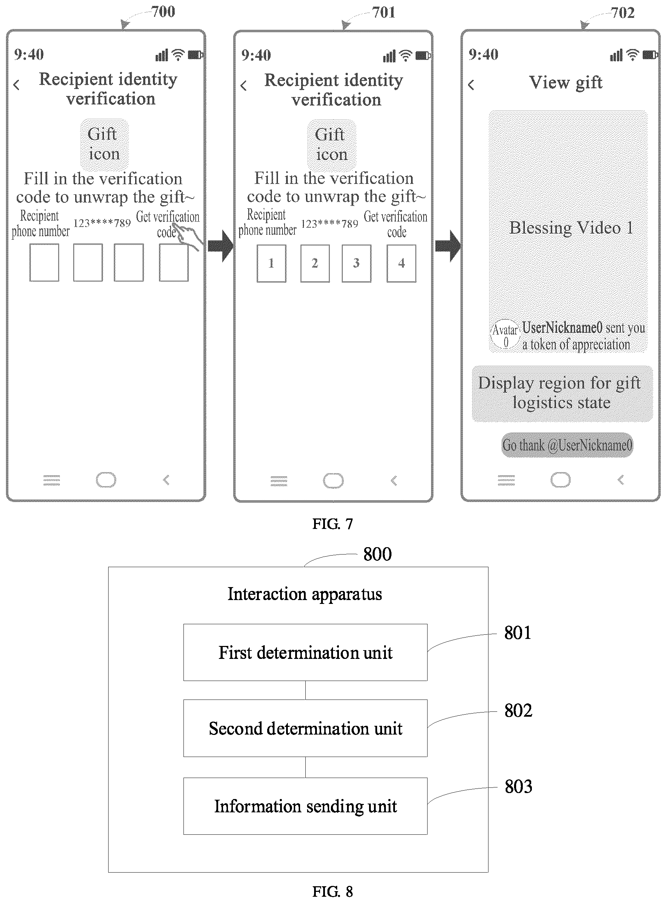

In practice, the aforementioned gift receiving account and the "content display account" may have a certain correlation (e.g., corresponding to the same phone number). However, in other cases, these two accounts may be completely unrelated. Therefore, to ensure that the target display content can ultimately be presented to the recipient, the present application also provides a possible implementation of the target display content. In this implementation, if there is no preset matching relationship between the content display account and the gift receiving account, the target display content includes a verification page (e.g., page 700 in FIG. 7) and an object configuration display content (e.g., page 702 in FIG. 7). Herein, the verification page is used to receive the verification information input using the content display account (e.g., the verification code shown in page 701 in FIG. 7); and the object configuration display content is used to display the target display content on the content display account according to the target display manner when it is determined that the verification information matches the target verification content corresponding to the gift receiving account (e.g., the verification code received by the phone number associated with the gift receiving account). Herein, the preset matching relationship can be established in advance; for example, it can specifically involve: the phone number bound to the content display account being the same as the phone number bound to the gift receiving account.

It can be seen that when the interaction method provided by the present application is applied to a certain client, for the recipient, if the recipient is logged into the client using the content display account (e.g., the account with avatar 3 and user nickname 3 shown in page 502 in FIG. 5), when the recipient wants to view the target display content on the client associated with the content display account, it can first be determined whether there is a preset matching relationship between the content display account and the gift receiving account (e.g., checking if the content display account and the gift receiving account are bound to the same phone number). If there is a match, the target display content can be directly presented according to the target display manner (e.g., page 702 in FIG. 7). If not, the verification page can be displayed first (e.g., page 700 in FIG. 7) so that after the recipient inputs verification information (such as the verification code shown in page 701 of FIG. 7) into that verification page, it can be determined whether the verification information matches the target verification content corresponding to the gift receiving account (e.g., the verification code received by the phone number associated with the gift receiving account). If they match, verification is confirmed, and the target display content can be displayed according to the target display manner (e.g., page 702 in FIG. 7). If they do not match, verification fails, and the recipient can either request a new verification code or follow other processes, which the present application does not specifically limit.

Additionally, the present application does not limit the trigger timing of the step "determining whether there is a preset matching relationship between the content display account and the gift receiving account". For example, when a message corresponding to the target display content is displayed in the chat page associated with the content display account (e.g., a page similar to page 601 shown in FIG. 6), and the recipient is logged into the client using the content display account, the trigger timing may specifically involve: in response to a trigger operation (such as a click operation) performed by the recipient on that message, determining whether there is a preset matching relationship between the content display account and the gift receiving account. For another example, when a access link corresponding to the target display content is displayed in a certain interaction system, and the interaction method provided by the present application is applied to a certain client while the recipient is logged into the client using the content display account, the trigger timing may involve: in response to a paste operation triggered by the recipient on the access link in the client, determining whether there is a preset matching relationship between the content display account and the gift receiving account.

It can be seen that, for the recipient, whether the recipient receive the target display content directly from the client or view that target display content through an access link in a certain interaction system within the client, it is necessary to determine whether there is a preset matching relationship between the account the recipient is logged into on that client and the gift receiving account. This effectively prevents the target display content from being shown to accounts other than the recipient, thereby enhancing the overall user experience.

Additionally, in some application scenarios, the giver may also choose to send the object to themselves as a gift. To better save time for the giver, they can use the click operation on the preset control in the configuration interface (e.g., control 206 shown in FIG. 2) to directly jump to the order details page. This allows the giver to skip the configuration process for the configuration interface, thereby enhancing the overall user experience.

Based on the interaction method according to the embodiments of the present application, an embodiment of the present application further provides an interaction apparatus, which is explained and described below with reference to FIG. 8. Herein, FIG. 8 is a schematic diagram of a structure of an interaction apparatus according to an embodiment of the present application. It should be noted that for the technical details of the interaction apparatus provided by the embodiment of the present application, please refer to the relevant content of the interactive method described above.

As shown in FIG. 8, an interaction apparatus 800 provided in an embodiment of the present application includes:
a first determination unit 801 configured to, in response to a gifting operation request, determine an object to be gifted and a gift receiving account, and display a configuration interface, where the configuration interface includes a plurality of candidate display configuration items corresponding to the object to be gifted, and the plurality of candidate display configuration items include at least one candidate display manner and at least one candidate display content;
a second determination unit 802 configured to, in response to a configuration operation triggered for the configuration interface, determine a target display configuration item, the target display configuration item including a target display manner and a target display content corresponding to the object to be gifted; and
an information sending unit 803 configured to send the target display configuration item to the gift receiving account to display the target display content on the gift receiving account according to the target display manner.

In a possible implementation, the target display manner is: adding the target display content to a to-be-played information display feed corresponding to the gift receiving account, the target display content corresponding to a preset arrangement position in the to-be-played information display feed.

In a possible implementation, the at least one candidate display content includes a plurality of candidate video data; and
the second determination unit 802 includes:
a first determination sub-unit configured to, in response to a selection operation for the target video data among the a plurality of candidate video data, determine the target display content according to the target video data.

In a possible implementation, the a plurality of candidate video data are determined according to at least one of a type of the object to be gifted, a delivery time of the object to be gifted, and an associated account corresponding to the object to be gifted, the associated account satisfying a preset association relationship with the object to be gifted.

In a possible implementation, the configuration interface further includes a video recording control;
the second determination unit 802 includes:
a first display sub-unit configured to, in response to a trigger operation for the video recording control, display a video recording page; and
a second determination sub-unit configured to, in response to a video recording operation triggered for the video recording page, generate video data to be used, and determine the target display content according to the video data to be used.

In a possible implementation, the configuration interface also displays an account configuration trigger control;
the interaction apparatus 800 further includes:
a first display unit configured to, in response to a trigger operation for the account configuration trigger control, display an account configuration page; and
a second display unit configured to, in response to an account configuration operation triggered for the account configuration page, determine the content display account corresponding to the gift receiving account and display a sending confirmation page; and
the information sending unit 803 is specifically configured to, in response to a sending confirmation operation triggered for the sending confirmation page, send the target display configuration item to the content display account to display the target display content on the content display account according to the target display manner.

In a possible implementation, the second determination unit 802 includes:
a third determination sub-unit configured to, in response to a sending confirmation operation triggered for the sending confirmation page, in response to determining that the content display account satisfies a preset account condition, determine both a feed display manner and a message display manner as the target display manner; the feed display manner being: adding the target display content to a to-be-played information display feed corresponding to the content display account; and the message display manner being: adding a message corresponding to the target display content to a chat page corresponding to the content display account; and
a fourth determination sub-unit configured to, in response to determining that the content display account does not satisfy a preset account condition, determine the message display manner as the target display manner.

In a possible implementation, the interaction apparatus 800 further includes:
a third display unit configured to, in response to determining that the content display account satisfies a preset account condition, display a push time configuration page; and
a third determination unit configured to, in response to a push time configuration operation triggered for the push time configuration page, determine a push time for the target display content;
the feed display manner being specifically: adding the target display content to a to-be-played information display feed corresponding to the content display account according to the push time.

In a possible implementation, the second display unit is specifically configured to: display the sending confirmation page within a first region of the configuration interface, where a first prompt content is displayed in a second region of the configuration interface; and there is no overlap between the second region and the first region; and
the interaction apparatus 800 further includes:
an information switching unit configured to, in response to a sending confirmation operation triggered for the sending confirmation page, switch the first prompt content displayed in the second region to a second prompt content, and switch the sending confirmation page to a sending result prompt interface;
a fourth display unit configured to, in response to a trigger operation for the sending result prompt interface, display a chat display page and display a message corresponding to the object to be gifted in the chat display page; and
a fifth display unit configured to, in response to a trigger operation for the message, display the target display content corresponding to the object to be gifted.

In a possible implementation, the target display content includes video data and logistics state description information;
the interaction apparatus 800 further includes:
a sixth display unit configured to, in response to a trigger operation for the video data, display a video display page corresponding to the video data;
   or
a seventh display unit configured to, in response to a trigger operation for the logistics state description information, display a logistics information display page corresponding to the object to be gifted.

In a possible implementation, the interaction apparatus 800 further includes:
a status adjustment unit configured to adjust the account configuration trigger control from a non-triggerable state to a triggerable state after the target display content is determined.

In a possible implementation, in response to determining that there is no preset matching relationship between the content display account and the gift receiving account, the target display content includes a verification page and an object configuration display content; the verification page is configured to receive verification information entered using the content display account; and the object configuration display content is configured to display on the content display account according to the target display manner when it is determined that the verification information matches the target verification content corresponding to the gift receiving account.

In a possible implementation, the interaction apparatus 800 further includes:
an eighth display unit configured to, in response to a preset operation, display a gift object aggregation page;
the first determination unit 801 includes:
   a second display sub-unit configured to, in response to a gift object order operation triggered for the gift object aggregation page, determine the object to be gifted, and display an order display page; and
   a fifth determination sub-unit configured to, in response to a gift receiving information input operation triggered for the order display page, determine the gift receiving account; and
   a third display sub-unit configured to, in response to a resource value payment operation triggered for the order display page, display the configuration interface.

As can be seen from the above related contents of an interaction apparatus 800, for the interaction apparatus 800 provided in the embodiment of the present application, after the interaction apparatus 800 receives a gifting operation request, an object to be gifted and a gift receiving account are determined, and a configuration interface is displayed, where the configuration interface includes a plurality of candidate display configuration items corresponding to the object to be gifted, and these candidate display configuration items includes at least one candidate display manner (e.g., direct messaging manner or primary feed push manner) and at least one candidate display content (e.g., multiple blessing videos); after a configuration operation triggered for the configuration interface is received, a target display configuration item is determined, such that the target display configuration item includes a target display manner and a target display content corresponding to the object to be gifted; and finally, sending the target display configuration item to the gift receiving account to display the target display content on the gift receiving account according to the target display manner, so that a user corresponding to the gift receiving account (i.e., a recipient) can view the target display content by means of the gift receiving account, thereby allowing the recipient to be informed that a user of the interaction apparatus 800 (i.e., a giver) has gifted a present. This is beneficial for enhancing both gift sending experience of the giver and the gift receiving experience of the recipient.

In addition, an embodiment of the present application further provides an electronic device. The device includes a processor and a memory. The memory is configured to store instructions or a computer program; and the processor is configured to execute the instructions or computer program in the memory to enable the electronic device to perform any implementation of the interaction method according to the embodiments of the present application.

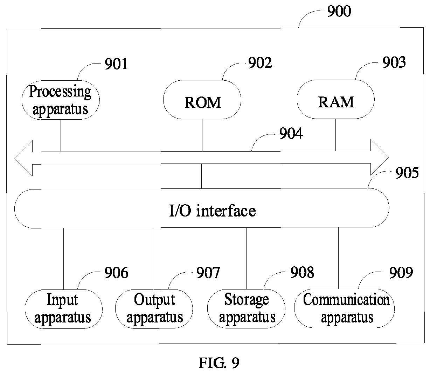

Reference is made to FIG. 9, which is a schematic diagram of a structure of an electronic device 900 suitable for implementing an embodiment of the present disclosure. A terminal device in this embodiment of the present disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in FIG. 9 is merely an example, and shall not impose any limitation on the function and scope of use of the embodiments of the present disclosure.

As shown in FIG. 9, the electronic device 900 may include a processing apparatus (e.g., a central processing unit and a graphics processing unit) 901 that may perform various suitable actions and processes in accordance with a program stored in a read-only memory (ROM) 902 or a program loaded from a storage apparatus 908 into a random access memory (RAM) 903. The RAM 903 further stores various programs and data required for operations of the electronic device 900. The processing apparatus 901, the ROM 902, and the RAM 903 are connected to one another through a bus 904. An input/output (I/O) interface 905 is also connected to the bus 904.

Generally, the following apparatuses may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a tape and a hard disk; and a communication apparatus 909. The communication apparatus 909 may allow the electronic device 900 to perform wireless or wired communication with other devices to exchange data. Although FIG. 9 shows the electronic device 900 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 909, installed from the storage apparatus 908, or installed from the ROM 902. The computer program, when executed by the processing apparatus 901, performs the above functions defined in the method in the embodiments of the present disclosure.

The electronic device according to this embodiment of the present disclosure and the method according to the above embodiments belong to the same inventive concept. For the technical details not exhaustively described in this embodiment, reference may be made to the above embodiments, and this embodiment and the above embodiments have the same beneficial effects.

An embodiment of the present application also provides a computer-readable medium having instructions or a computer program stored therein which, when run on a device, cause the device to perform any implementation of the interaction method provided by embodiments of the present application.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client or a server may perform communication by using any currently known or future-developed network protocol such as a hypertext transfer protocol (HTTP), and may interconnect with digital data communication (e.g., a communication network) in any form or medium. Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, enable the electronic device to perform the above method.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (e.g., connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of the unit/module does not constitute a limitation on the unit itself under certain circumstances.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It should be noted that the various embodiments in this specification are described in a progressive manner, and each embodiment focuses on the differences from other embodiments. The same or similar parts between the various embodiments may be referenced to each other. For the system or apparatus disclosed in this embodiment, since it corresponds to the method disclosed in the embodiments, the description is relatively simple, and for the related parts, reference may be made to the description of the method.

It should be understood that, in the present application, "at least one" means one or more, and "a plurality of" means two or more. The term "and/or" is used to describe an association relationship between associated objects, and indicates that three relationships may exist, for example, A and/or B may indicate that: only A exists, only B exists, and both A and B exist, where A or B may be singular or plural. The character "/" generally indicates an "or" relationship between the associated objects. "At least one of the following" or similar expressions refers to any combination of these items, including any combination of single items or plural items. For example, at least one of a, b, or c may indicate: a, b, and c, "a and b", "a and c", "b and c", or "a and b and c", where a, b, or c may be singular or plural.

It should also be noted that, herein, relative terms such as "first" and "second" are only used to distinguish one entity or operation from another entity or operation, and do not necessarily require or imply that such an actual relationship or order exists between these entities or operations. Moreover, the terms "include" and "include", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including a ..." does not exclude another identical element in a process, method, article, or device that includes the element.

The steps of the method or algorithm described in conjunction with the embodiments disclosed herein may be implemented directly in hardware, in a software module executed by a processor, or in a combination of the two. The software module may be disposed in a random access memory (RAM), a memory, a read-only memory (ROM), an electrically programmable ROM, an electrically erasable programmable ROM, a register, a hard disk, a removable disk, a CD-ROM, or any other form of storage medium known in the art.

With respect to the above description of the disclosed embodiments, those skilled in the art could implement or use the present application. Various modifications to these embodiments are apparent to those skilled in the art, and the general principle defined herein may be practiced in other embodiments without departing from the spirit or scope of the present application. Therefore, the present application is not limited to the embodiments described herein but is to be accorded with the broadest scope consistent with the principle and novel features disclosed herein.

## Claims

1. An interaction method, comprising:
in response to a gifting operation request, determining an object to be gifted and a gift receiving account, and displaying a configuration interface, wherein the configuration interface comprises a plurality of candidate display configuration items corresponding to the object to be gifted, and the plurality of candidate display configuration items comprise at least one candidate display manner and at least one piece of candidate display content;
in response to a configuration operation triggered for the configuration interface, determining a target display configuration item, wherein the target display configuration item comprises a target display manner and target display content corresponding to the object to be gifted; and
sending the target display configuration item to the gift receiving account, to display the target display content on the gift receiving account in the target display manner.

2. The method according to claim 1, wherein the target display manner is: adding the target display content to a to-be-played information display feed corresponding to the gift receiving account, the target display content corresponding to a preset arrangement position in the to-be-played information display feed.

3. The method according to claim 1, wherein the at least one piece of candidate display content comprises a plurality of pieces of candidate video data; and
wherein a determination process of the target display content comprises:
in response to a selection operation for the target video data of the plurality of candidate video data, determining the target display content based on target video data.

4. The method according to claim 3, wherein the plurality of pieces of candidate video data are determined based on at least one of a type of the object to be gifted, a delivery time of the object to be gifted, and an associated account corresponding to the object to be gifted, the associated account satisfying a preset association relationship with the object to be gifted.

5. The method according to claim 1, wherein the configuration interface further comprises a video recording control;
wherein a determination process of the target display content comprises:
in response to a trigger operation for the video recording control, displaying a video recording page; and
in response to a video recording operation triggered for the video recording page, generating video data to be used, and determining the target display content based on the video data to be used.

6. The method according to claim 1, wherein the configuration interface further displays an account configuration trigger control;
wherein the method further comprises:
in response to a trigger operation for the account configuration trigger control, displaying an account configuration page; and
in response to an account configuration operation triggered for the account configuration page, determining a content display account corresponding to the gift receiving account and displaying a sending confirmation page; and
wherein the sending the target display configuration item to the gift receiving account, to display the target display content on the gift receiving account in the target display manner comprises:
in response to a sending confirmation operation triggered for the sending confirmation page, sending the target display configuration item to the content display account to display the target display content on the content display account in the target display manner.

7. The method according to claim 6, wherein a determination process of the target display manner comprises:
in response to the sending confirmation operation triggered for the sending confirmation page, in response to determining that the content display account satisfies a preset account condition, determining both a feed display manner and a message display manner as the target display manner; the feed display manner is: adding the target display content to a to-be-played information display feed corresponding to the content display account, and the message display manner is: adding a message corresponding to the target display content to a chat page corresponding to the content display account; and
in response to determining that the content display account does not satisfy a preset account condition, determining the message display manner as the target display manner.

8. The method according to claim 7, wherein the method further comprises:
in response to determining that the content display account satisfies a preset account condition, displaying a push time configuration page; and
in response to a push time configuration operation triggered for the push time configuration page, determining a push time for the target display content; and
wherein the feed display manner is specifically: adding the target display content to the to-be-played information display feed corresponding to the content display account based on the push time.

9. The method according to claim 6, wherein the displaying a sending confirmation page comprises:
displaying the sending confirmation page within a first region of the configuration interface, wherein first prompt content is displayed in a second region of the configuration interface, and there is no overlap between the second region and the first region; and
wherein the method further comprises:
in response to a sending confirmation operation triggered for the sending confirmation page, switching the first prompt content displayed in the second region to a second prompt content, and switching the sending confirmation page to a sending result prompt interface;
in response to a trigger operation for the sending result prompt interface, displaying a chat display page and displaying a message corresponding to the object to be gifted in the chat display page; and
in response to a trigger action for the message, displaying the target display content corresponding to the object to be gifted.

10. The method according to claim 9, wherein the target display content comprises video data and logistics state description information;
wherein the method further comprises:
in response to a trigger operation for the video data, displaying a video display page corresponding to the video data;
or
in response to a trigger operation for the logistics state description information, displaying a logistics information display page corresponding to the object to be gifted;
and/or
wherein the method further comprises:
adjusting the account configuration trigger control from a non-triggerable state to a triggerable state after the target display content is determined.

11. The method according to claim 6, wherein in response to determining that there is no preset matching relationship between the content display account and the gift receiving account, the target display content comprises a verification page and object configuration display content; the verification page is configured to receive verification information entered using the content display account; and the object configuration display content is configured to display on the content display account in the target display manner in response to determining that that the verification information matches target verification content corresponding to the gift receiving account.

12. The method according to claim 1, wherein the method further comprises:
in response to a preset operation, displaying a gift object aggregation page;
wherein the in response to a gifting operation request, determining an object to be gifted and a gift receiving account comprises:
in response to a gift object order operation triggered for the gift object aggregation page, determining the object to be gifted, and displaying an order display page; and
in response to a gift receiving information input operation triggered for the order display page, determining the gift receiving account; and
wherein the displaying a configuration interface comprises:
in response to a resource value payment operation triggered for the order display page, displaying the configuration interface.

13. An interaction apparatus, comprising:
a first determination unit configured to, in response to a gifting operation request, determine an object to be gifted and a gift receiving account, and display a configuration interface, wherein the configuration interface comprises a plurality of candidate display configuration items corresponding to the object to be gifted, and the plurality of candidate display configuration items comprise at least one candidate display manner and at least one piece of candidate display content;
a second determination unit configured to, in response to a configuration operation triggered for the configuration interface, determine a target display configuration item, wherein the target display configuration item comprises a target display manner and target display content corresponding to the object to be gifted; and
an information sending unit configured to send the target display configuration item to the gift receiving account, to display the target display content on the gift receiving account in the target display manner.

14. An electronic device, comprising: a processor and a memory, wherein
the memory is configured to store instructions or a computer program; and
the processor is configured to execute the instructions or computer program stored in the memory to cause the electronic device to perform the method according to any of claims 1 to 12.

15. A computer-readable medium, storing instructions or a computer program, wherein when the instructions or the computer program is run on a device, the device is caused to perform the method according to any of claims 1 to 12.
